# EUROPEAN PATENT SPECIFICATION

(11) **EP 0 559 485 B1**
(45) Date of publication and mention of the grant of the patent: **14.05.1997**
(21) Application number: 93301682.6
(22) Date of filing: 05.03.1993
(51) Int. Cl.: C08L 77/00, C08L 71/12, C08K 5/00, C08K 13/04

(54) **Thermoplastic resin composition**
Thermoplastische Harzzusammensetzung
Composition de résine thermoplastique

(30) Priority: 06.03.1992 JP 49357/92
(43) Date of publication of application: 08.09.1993
(73) Proprietor: SUMITOMO CHEMICAL COMPANY, LIMITED, Chuo-ku Osaka 541 (JP)
(72) Inventor: Nagaoka, Kenji, Ichihara-shi, Chiba 299-01 (JP); Hagimori, Hiroshi, Ichihara-shi, Chiba 299-01 (JP); Kitadono, Kaoru, Ichihara-shi, Chiba 299-01 (JP)
(74) Representative: Cresswell, Thomas Anthony

(56) References cited:
- EP-A- 0 270 247
- EP-A- 0 337 814
- EP-A- 0 375 177

## Description

The present invention relates to a novel thermoplastic resin composition which is excellent in melt flowability and is made into shaped articles by injection molding.

More particularly, it relates to a novel thermoplastic resin composition which comprises a polyphenylene ether, a polyamide and an inorganic fiber such as glass fibers and which is excellent in heat resistance, mechanical properties, processability and solvent resistance, small in linear expansion coefficient, less in warpage and excellent in dimensional stability.

Polyphenylene ether is a thermoplastic resin superior in various properties such as mechanical properties, heat resistance, low-temperature resistance and dimensional stability. However, polyphenylene ether itself is considerably inferior in impact resistance and solvent resistance, and is unsatisfactory in terms of processability due to its high melt viscosity. Polyamide resin is a thermoplastic resin superior in mechanical strength, solvent resistance and processability, but is inferior in impact resistance and heat resistance and besides, inferior in dimensional stability due to its high water absorption. In order to offset one disadvantage by one advantage, blends of the two resins have been proposed see EP-A-0 337 814 and EP-A-270247. However, the blend of the two resins alone is sometimes insufficient in mechanical properties such as dimensional stability and rigidity and heat resistance for some uses and in order to improve dimensional stability, heat resistance and rigidity of polyphenylene ether·polyamide resin compositions, it has been attempted to add glass fibers to the compositions, see EP-A-0 375 177.

Japanese Patent Kokai No. 63-101452 discloses a composition containing wollastonite mainly composed of calcium silicate and/or glass fibers, but this composition seriously deteriorates in falling weight impact strength while it is improved in flexural modulus which serves as an indication of rigidity.

There have not yet been obtained polyphenylene ether·polyamide resin compositions containing a glass fiber which are well balanced in flowability, dimensional stability (low linear expansion coefficient), rigidity, flexural strength and impact strength.

The object of the present invention is to provide a polyphenylene ether · polyamide resin composition filled with inorganic fibers such as glass fibers (hereafter referred to as "filler composition") which is superior in injection moldability, high in dimensional stability, namely, small in linear expansion coefficient, especially, at high temperatures and excellent in flexural modulus, flexural strength and impact strength.

Resin compositions comprising a polyphenylene ether, an aliphatic polyamide and a glass fiber have the defect that flowability reduces due to filling with the glass fiber, resulting in deterioraration of processability. As a result of intensive research conducted by the inventors in an attempt to improve impact strength and flexural strength of a composition comprising a polyphenylene ether, an aliphatic polyamide, a glass fiber and others without damaging melt flowability, it has been found that a filler composition improved in impact strength and flexural strength and well balanced in the properties can be obtained by combining (A) a polyphenylene ether having an intrinsic viscosity of 0.55 dl/g or more and less than 0.65 dl/g, (B) an aliphatic polyamide having a molecular weight of 10,000-30,000, and (C) a specific compatibilizing agent. Thus, the present invention has been accomplished.

The present invention accordingly provides a thermoplastic resin composition which comprises:
(A) a polyphenylene ether having an intrinsic viscosity of 0.55 dl/g or more and less than 0.65 dl/g measured in chloroform at 30°C;
(B) an aliphatic polyamide having a number-average molecular weight of 10,000 or more and less than 30,000 measured in terms of the amount of end-group;
(C) a compatibilizing agent which is:
   (i) an unsaturated polar compound having in its molecule both (a) a carbon-carbon double bond or a carbon-carbon triple bond and (b) a carboxyl group, an acid anhydride group, an amino group, an acid amide group, an imido group, an epoxy group, a carboxylate group, an isocyanate group, a methylol group or a hydroxyl group, or
   (ii) a compound selected from aliphatic polycarboxylic acids and derivatives thereof of formula:

      (R^{I}O)ₘR(COOR^{II})ₙ(CONR^{III}R^{IV})ₛ

      wherein R represents a straight chain or branched chain saturated aliphatic hydrocarbon group of 2-20 carbon atoms and R^{I} is selected from hydrogen and alkyl, aryl, acyl and carbonyldioxy groups of 1-10 carbon atoms; each of R^{II} is independently selected from hydrogen and alkyl and aryl groups of 1-20 carbon atoms; R^{III} and R^{IV} are independently selected from hydrogen and alkyl and aryl groups of 1-10 carbon atoms; m=1, (n+s) is greater than or equal to 2 and n and s are each greater than or equal to 0; and (OR^{I}) is at the position α or β with respect to the carbonyl group and at least two carbonyl groups are separated by 2-6 carbon atoms; and
(D) an inorganic fiber.

The polyphenylene ether (A) used in the present invention may be a homopolymer or a copolymer composed of the repeating unit represented by the following formula (I) and/or the repeating unit represented by the following formula (II), a mixture of said homopolymer and said copolymer, a mixture of said polymer with a styrene resin such as polystyrene or a graft copolymer of said polymer with styrene: 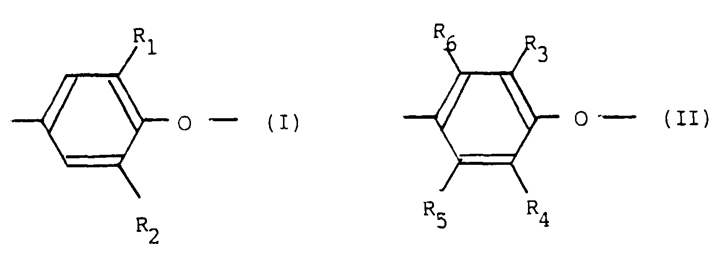 wherein R₁, R₂, R₃, R₄, R₅ and R₆ which may be identical or different each represents a monovalent residue such as an alkyl group of 1-4 carbon atoms excluding tert-butyl group, an aryl group, a halogen atom or a hydrogen atom and R₃ and R₅ cannot be simultaneously hydrogen atom.

Typical examples of the homopolymers of polyphenylene ether are poly(2,6-dimethyl-1,4-phenylene)ether, poly(2-methyl-6-ethyl-1,4-phenylene) ether, poly(2,6-diethyl-1,4-phenylene)ether, poly(2-ethyl-6-n-propyl-1,4-phenylene)ether, poly(2,6-di-n-propyl-1,4-phenylene)ether, poly(2-methyl-6-n-butyl-1,4-phenylene)ether, poly(2-ethyl-6-isobutyl-1,4-phenylene)ether, poly(2-methyl-6-chloro-1,4-phenylene) ether, poly(2-methyl-6-hydroxyethyl-1,4-phenylene) ether and poly(2-methyl-6-chloroethyl-1,4-phenylene)ether.

The copolymer of polyphenylene ether includes polyphenylene ether copolymers mainly composed of polyphenylene ether structure which is obtained by copolymerization with o-cresol or an alkyl-substituted phenol such as 2,3,6-trimethylphenol which is represented by the formula (III). 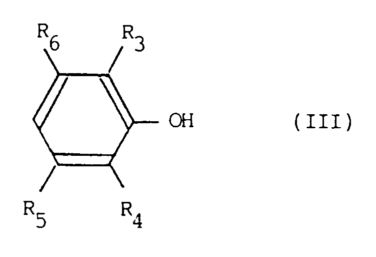 wherein R₃, R₄, R₅ and R₆ each represents a monovalent residue such as an alkyl group of 1-4 carbon atoms excluding tert-butyl group, an aryl group, a halogen atom or a hydrogen atom and R₃ and R₅ cannot be simultaneously hydrogen atom.

The polyphenylene ether (A) used in the present invention has an intrinsic viscosity of 0.55 dl/g or more and less than 0.65 dl/g, preferably 0.55 dl/g or more and less than 0.62 dl/g measured in chloroform solution at 30°C.

The aliphatic polyamide (B) includes polyamide 6 and polyamide 66 having a number-average molecular weight of 10,000 or more and less than 30,000, preferably 11,000 or more and less than 25,000, more preferably 11,000 or more and less than 16,000 measured in terms of the amount of end-group.

The amount of amino end-group and that of carboxyl end-group may balance with each other or the amount of one of them may be more than that of another.

As examples of the compatibilizing agent (C) (i) having in its molecule both (a) a carbon-carbon double bond or a carbon-carbon triple bond and (b) a carboxyl group, an acid anhydride group, an amino group, an acid amide group, an imido group, an epoxy group, a carboxylate group, an isocyanate group, a methylol group or a hydroxyl group, mention may be made of maleic anhydride, maleic acid, fumaric acid, maleimide, maleic hydrazide and reaction products of maleic anhydride and diamines, for example, those having the structure represented by the following formula: 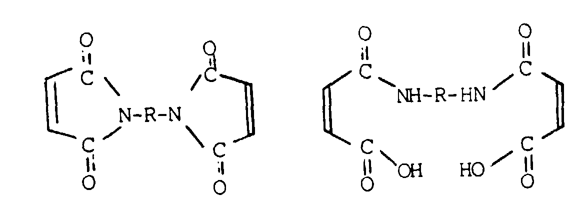 wherein R represents an aliphatic or aromatic group.

Further examples are methyl nadic anhydride, dichloromaleic anhydride, maleinimide; natural fats and oils such as soybean oil, tung oil, caster oil, linseed oil, hempseed oil, cottonseed oil, sesame oil, rapeseed oil, peanut oil, tsubaki oil, olive oil, coconut oil, and sardine oil; epoxidized natural fats and oils such as epoxidized soybean oil; unsaturated carboxylic acids such as acrylic acid, butenoic acid, crotonic acid, vinylacetic acid, methacrylic acid, pentenoic acid, angelic acid, tiglic acid, 2-pentenoic acid, 3-pentenoic acid, α-ethylacrylic acid, β-methylcrotonic acid, 4-pentenoic acid, 2-hexenoic acid, 2-methyl-2-pentenoic acid, 3-methyl-2-pentenoic acid, α -ethylcrotonic acid, 2,2-dimethyl-3-butenoic acid, 2-heptenoic acid, 2-octenoic acid, 4-decenoic acid, 9-undecenoic acid, 10-undecenoic acid, 4-dodecenoic acid, 5-dodecenoic dodecenoic acid, 4-tetradecenoic acid, acid, 9-hexadecenoic acid, 2-octadecenoic acid, 9-octadecenoic acid, eicosenoic acid, docosenoic acid, erucic acid, tetracosenoic acid, mycolipenic acid, 2,4-pentadienoic acid, 2,4-hexadienoic acid, diallylacetic acid, geranic acid, 2,4-decadienoic acid, 2,4-dodecadienoic acid, 9,12-hexadecadienoic acid, 9,12-octadecadienoic acid, hexadecatrienoic acid, linolic acid, linoleic acid, octadecatrienoic acid, eicosadienoic acid, eicosatrienoic acid, eicosatetraenoic acid, ricinoleic acid, eleostearic acid, oleic acid, eicosapentaenoic acid, erucic acid, docosadienoic acid, docosatrienoic acid, docosatetraenoic acid, docosapentaenoic acid, tetracosenoic acid, hexacosenoic acid, hexacodienoic acid, octacosenoic acid and tetracontenoic acid, esters, acid amides and anhydrides of these unsaturated carboxylic acids; unsaturated alcohols such as allyl alcohol, crotyl alcohol, methylvinylcarbinol, allylcarbinol, methylpropenylcarbinol, 4-pentene-1-ol, 10-undecene-1-ol, propargyl alcohol, 1,4-pentadiene-3-ol, 1,4-hexadiene-3-ol, 3,5-hexadiene-2-ol, 2,4-hexadiene-1-ol; alcohols represented by the formulas CₙH₂ₙ₋₅OH, CₙH₂ₙ₋₇OH, and CₙH₂ₙ₋₉OH (wherein n is a positive integer); unsaturated alcohols such as 3-butene-1,2-diol, 2,5-dimethyl-3-hexene-2,5-diol, 1,5-hexadiene-3,4-diol, and 2,6-octadiene-4,5-diol; unsaturated amines prepared by substituting the OH group of these unsaturated alcohols with -NH₂ group; glycidyl acrylate, glycidyl methacrylate, and allyl glycidyl ether.

It is needless to say that the compatibilizing agents (i) include compounds containing two or more functional groups of the above (a) and two or more identical or different functional groups of the above (b). It is also possible to use two or more of these compounds. Among them, suitable are maleic anhydride, maleic acid, fumaric acid, itaconic acid, himic anhydride, glycidyl acrylate, glycidyl methacrylate and allyl glycidyl ether.

The aliphatic polycarboxylic acid derivatives used as the compatibilizing agent (C) (ii) include aliphatic polycarboxylic acids, salts thereof, acid amides thereof or esters thereof represented by the following formula:

(R₁O)ₘR(COOR₂)ₙ(CONR₃R₄)ₛ

[wherein R represents a straight chain or branched chain saturated hydrocarbon group of 2 - 20 carbon atoms, R₁ represents hydrogen or an alkyl, acyl or carbonyldioxy group of 1-10 carbon atoms, R₂ each represents hydrogen or an alkyl or aryl group of 1-20 carbon atoms, R₃ and R₄ each represents hydrogen or an alkyl or aryl group of 1-10 carbon atoms, m is 1 or 2, (n+s) is 2 or more and n and s are respectively 0 or more and (OR₁) is at the position α or β in respect to the carbonyl group and at least two carbonyl groups are separated by 2-6 carbon atoms].

Examples of the aliphatic polycarboxylic acid derivatives (ii) are oxycarboxylic acids such as citric acid, malic acid, tartaric acid and agaricic acid; oxycarboxylic acid salts such as calcium citrate, calcium malate, potassium citrate and potassium malate; oxycarboxylic acid ester such as acetyl citrate, stearyl citrate, distearyl citrate, acetyl malate and stearyl malate; oxycarboxylic acid amides such as N,N'-diethylcitramide, N,N'-dipropylcitramide, N-phenylcitramide, N-dodecylcitramide, N,N'-didodecylcitramide and N-dodecylmalic amide. Among them, oxycarboxylic acids are preferred and citric acid and malic acid are more preferred.

As the inorganic fibers (D) used in the present invention, preferred are glass fibers and carbon fibers.

The glass fibers are preferably chopped starands of 15µ or less in fiber diameter and 6 mm or less in length. If the diameter exceeds 15 µ, improvement of mechanical strength is small and amount of warpage in molding increases. Glass fibers of 10µ or less in diameter and 3 mm or less in length are especially preferred. Preferably, average fiber length of the inorganic fibers (D) dispersed in the present composition is 100-500, more preferably 150-400 µm.

Various coupling agents may additionally be used for improving interfacial adhesion and dispersibility of glass fibers and others to and in polyphenylene ether resin and/or polyamide. The coupling agents usually include those of silane type, titanium type and others. Especially preferred are silane coupling agents, for example, epoxy silanes such as γ-glycidoxypropyltrimethoxysilane, vinyl silanes such as vinyltrichlorosiliane and amino silanes such as γ-aminopropyltriethoxysilane.

In the present invention, the mixing ratio of the components (A)-(D) is preferably as follows. The component (C): 0.01-10 parts by weight and the component (D): 5-150 parts by weight per totally 100 parts by weight of the component (A): 30-60% by weight and the component (B): 70-40% by weight.

The thermoplastic resin composition of the present invention may further contain rubber-like materials, inorganic fillers, pigments, ultraviolet absorbers, heat stabilizers, flame retardants, antioxidants or plasticizers.

There is no limitation in the method of blending (A) polyphenylene ether, a mixture of polyphenylene ether and styrene resin such as polystyrene or graft copolymer of polyphenylene ether and styrene, (B) aliphatic polyamide, (D) inorganic fiber and (C) compatibilizing agent and any known melt kneading methods can be employed. Extruders, kneaders, rolls and the like can be used as melt kneading apparatuses and especially preferred are extruders. There is also no special limitation in the sequence of adding the respective components in melt kneading.

That is, there may be used any of the following methods: a method of simultaneously adding the components (A), (B), (D) and (C) and melt kneading them together; a method of previously melt kneading the components (A) and (C) in the presence or absence of a radical initiator and then adding thereto the components (B) and (D), followed by melt kneading them; a method of previously melt kneading the components (A), (C) and (D) in the presence or absence of a radical initiator and then adding thereto the component (B), followed by melt kneading them; and a method of previously melt kneading the components (A) and (C), then adding thereto the component (B) and further adding thereto the component (D), followed by melt kneading them.

The kneaded resin composition is shaped by injection molding. Shaped articles obtained from the thermoplastic resin composition are suitably used for automobile parts and electrical and electronic parts.

Examples of the shaped articles for automobile parts are cylinder bend, fan shroud, distributor cap, air cleaner, radiator tank, battery case, radiator shroud, cooling fan, heater case, mirror body and wheel cover.

As the electronic parts, they are used for parts required to have high strength and heat resistance such as housing, chassis, connector, base for printed circuit and pulley.

The following examples are set forth for purposes of the present invention. It should be understood that they are exemplary only, and should not be construed as limiting the invention in any manner. The test methods employed in the Examples are as follows:
M.I. (melt index): ASTM D1238 with measuring temperature of 280°C and a load of 10 kg.
Izod impact strength (Izod): ASTM D256 with notched test specimen of 3.2 mm thick.
Flexural modulus (FM): ASTM D790
Flexural strength (FS): ASTM D790
Heat distortion temperature (H.D.T.): ASTM D648 (load 18.6 kg)

### Example 1

Thirtyfive parts by weight of polyphenylene ether having an intrinsic viscosity of 0.56 dl/g measured in a chloroform solution at 30°C and 0.4 part by weight of maleic anhydride as a compatibilizing agent were charged in a continuous twin-screw kneader (TEM 50 manufactured by Toshiba Machine Co.,Ltd.) through a first hopper and then 35 parts by weight of a polyamide (1020BRL having a number-average molecular weight of 12,000 manufactured by Unitika Ltd.) and 30 parts by weight of a glass fiber (RES03-TP64 manufactured by Nippon Glass Fiber Co.) were charged through a second hopper located between the first hopper and the air vent using a metering feeder. The mixture was melted and kneaded and granulated at a cylinder temperature of 260°C and at a screw rotation of 380 rpm.

The resulting composition was injection molded by an injection molding machine (IS-220E manufactured by Toshiba Machine Co., Ltd) to make test pieces for evaluation of their properties. The test results are shown in Table 1.

### Example 2

A resin composition was prepared at the same mixing ratio and under the same extrusion conditions and in the same manner as in Example 1 except that a polyphenylene ether having an intrinsic viscosity of 0.62 dl/g was used as the polyphenylene ether.

### Example 3

A resin composition was prepared at the same mixing ratio and under the same extrusion conditions and in the same manner as in Example 1 except that NYLON 1030BRL (having a number-average molecular weight of 17,500 manufactured by Unitika Ltd.) was used as the polyamide.

### Comparative Example 1

A resin composition was prepared at the same mixing ratio and under the same extrusion conditions and in the same manner as in Example 1 except that a polyphenylene ether having an intrinsic viscosity of 0.40 dl/g in place of 0.56 dl/g was used as the polyphenylene ether.

### Comparative Example 2

A resin composition was prepared at the same mixing ratio and under the same extrusion conditions and in the same manner as in Example 1 except that a polyphenylene ether having an intrinsic viscosity of 0.48 dl/g in place of 0.56 dl/g was used as the polyphenylene ether.

### Comparative Example 3

A resin composition was prepared at the same mixing ratio and under the same extrusion conditions and in the same manner as in Example 1 except that NYLON A1045 (having a number-average molecular weight of 33,000 manufactured by Unitika Ltd.) was used as the polyamide.

### Comparative Example 4

A resin composition was prepared at the same mixing ratio and under the same extrusion conditions and in the same manner as in Example 1 except that 5 parts by weight of 232 (styrene-maleic anhydride copolymer manufactured by Dylark Co.) was used as the compatibilizing agent.

### Example 4

A resin composition was prepared at the same mixing ratio and under the same extrusion conditions and in the same manner as in Example 1 except that UBE NYLON 2015B (having a number-average molecular weight of 15,000 manufactured by Ube Kosan Co.) was used as the polyamide.

### Comparative Example 5

A resin composition was prepared at the same mixing ratio and under the same extrusion conditions and in the same manner as in Example 4 except that a polyphenylene ether having an intrinsic viscosity of 0.40 dl/g was used as the polyphenylene ether.

### Example 5

A resin composition was prepared at the same mixing ratio and under the same extrusion conditions and in the same manner as in Example 1 except that a mixture of 17.5 parts by weight of a polyphenylene ether having an intrinsic viscosity of 0.56 dl/g and 17.5 parts by weight of a polystyrene styrene (ESBLITE T-8K manufactured by Nihon Kogyo Co.) was used as the polyphenylene ether.

### Comparative Example 6

A resin composition was prepared at the same mixing ratio and under the same extrusion conditions and in tne same manner as in Example 5 except that a polyphenylene ether having an intrinsic viscosity of 0.4 dl/g was used as the polyphenylene ether.

The test results in Examples 1-4 and Comparative Examples 1-5 are shown in Table 1 and those in Example 5 and Comparative Example 6 are shown in Table 2.

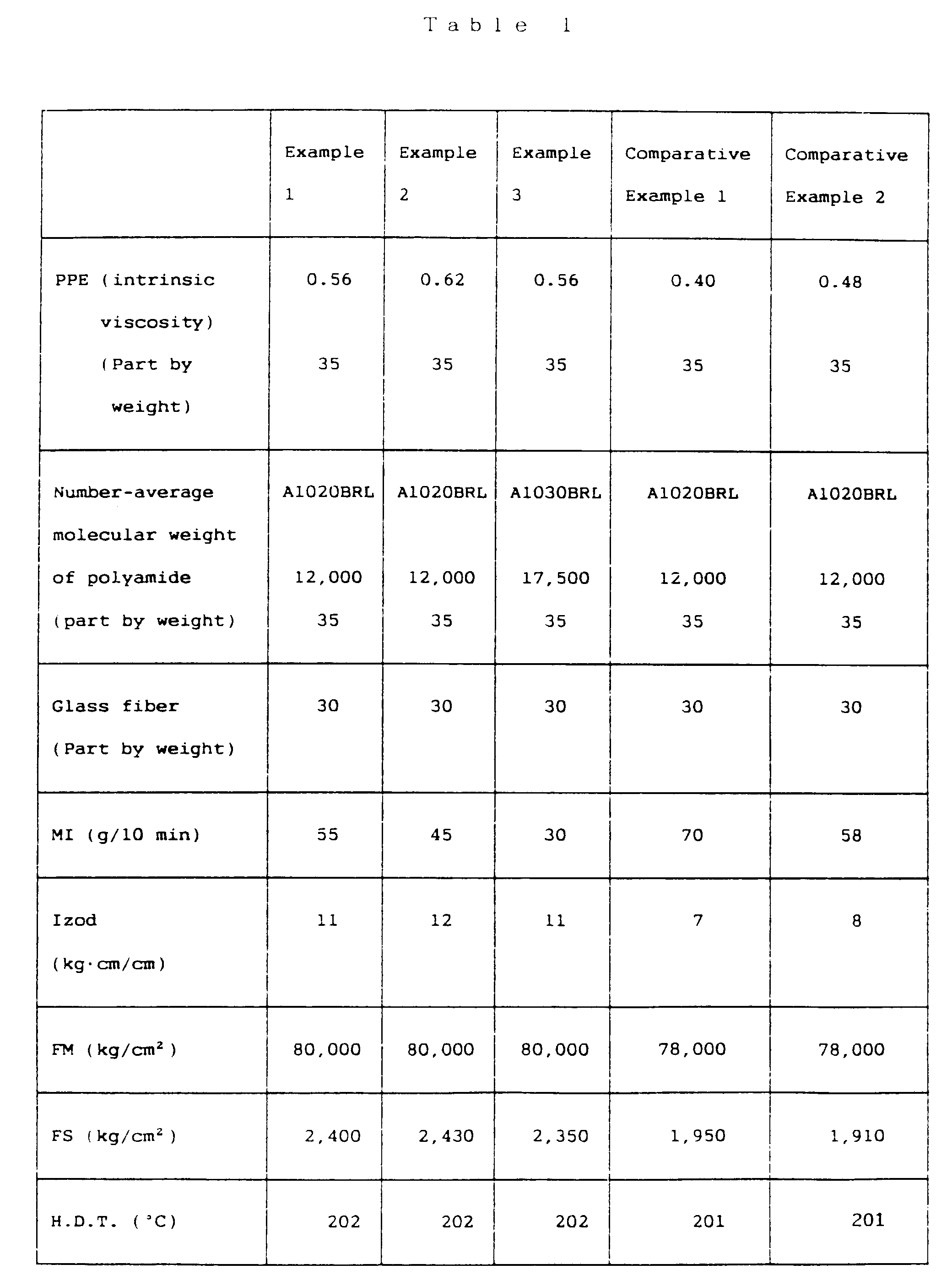

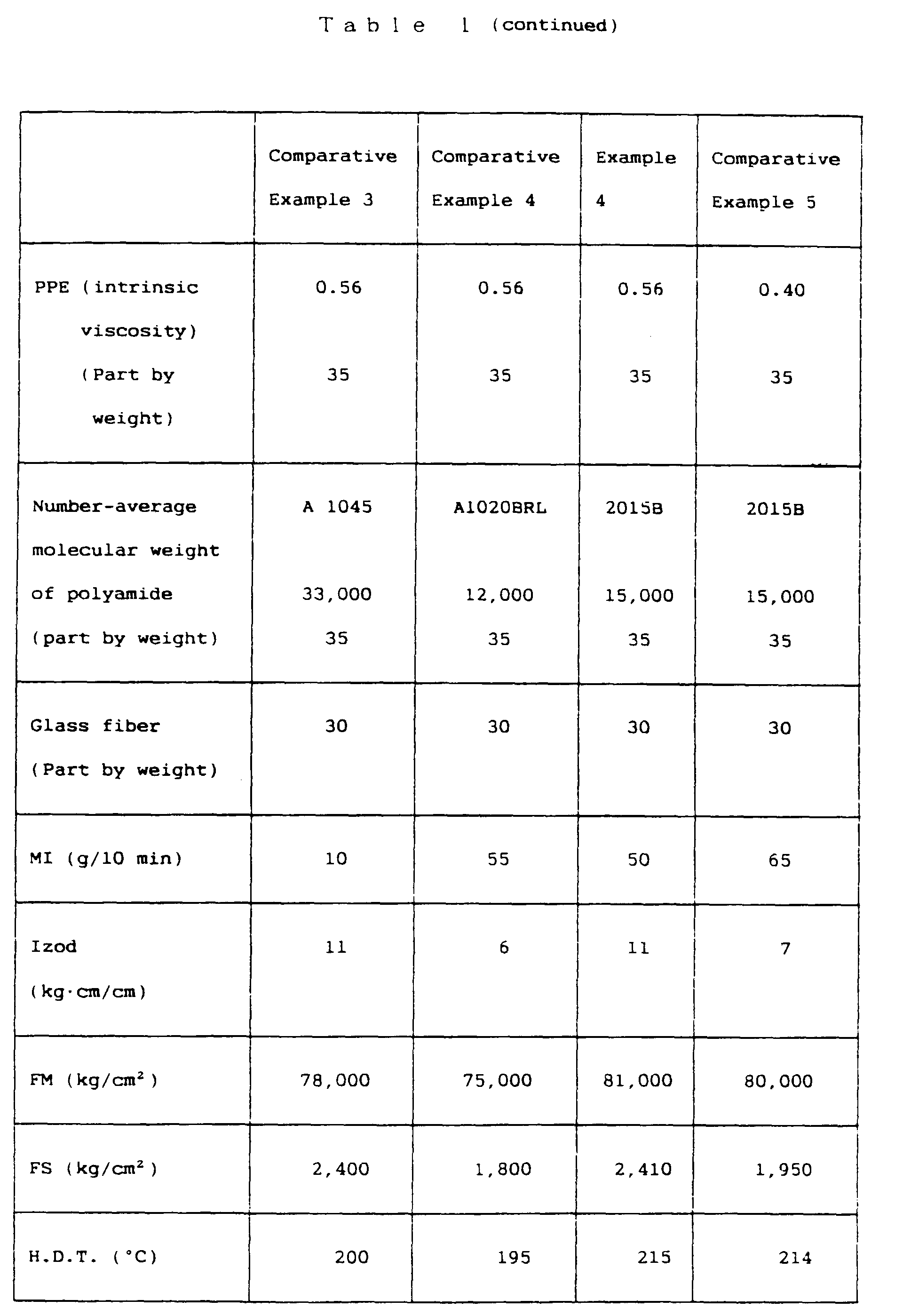

**Table 2**

| | Example 5 | Comparative Example 6 |
|---|---|---|
| PPE (intrinsic viscosity) | 0.56 | 0.40 |
| (Part by weight) | 17.5 | 17.5 |
| Polystyrene | 17.5 | 17.5 |
| Number-average molecular | A1020BRL | A1020BRL |
| weight of polyamide | 12,000 | 12,000 |
| (part by weight) | 35 | 35 |
| Glass fiber | 30 | 30 |
| (Part by weight) | | |
| MI (g/10 min) | 65 | 80 |
| Izod (kg·cm/cm) | 9 | 5 |
| FM (kg/cm²) | 85,000 | 85,000 |
| FS (kg/cm²) | 2,200 | 1,850 |
| H.D.T. (°C) | 165 | 165 |

As explained above, the present invention can provide a polyphenylene ether - polyamide composition filled with inorganic fibers such as glass fibers which is superior in injection moldability, high in dimensional stability, small in linear expansion coefficient especially at high temperatures and excellent in flexural modulus, flexural strength and impact strength.

## Claims

1. A thermoplastic resin composition which comprises:
(A) a polyphenylene ether having an intrinsic viscosity of 0.55 dl/g or more and less than 0.65 dl/g measured in chloroform at 30°C;
(B) an aliphatic polyamide having a number-average molecular weight of 10,000 or more and less than 30,000 measured in terms of the amount of end-group;
(C) a compatibilizing agent which is:
(i) an unsaturated polar compound having in its molecule both (a) a carbon-carbon double bond or a carbon-carbon triple bond and (b) a carboxyl group, an acid anhydride group, an amino group, an acid amide group, an imido group, an epoxy group, a carboxylate group, an isocyanate group, a methylol group or a hydroxyl group, or
(ii) a compound selected from aliphatic polycarboxylic acids and derivatives thereof of formula:
(R^{I}O)ₘR(COOR^{II})ₙ(CONR^{III}R^{IV})ₛ
wherein R represents a straight chain or branched chain saturated aliphatic hydrocarbon group of 2-20 carbon atoms and R^{I} is selected from hydrogen and alkyl, aryl, acyl and carbonyldioxy groups of 1-10 carbon atoms; each of R^{II} is independently selected from hydrogen and alkyl and aryl groups of 1-20 carbon atoms; R^{III} and R^{IV} are independently selected from hydrogen and alkyl and aryl groups of 1-10 carbon atoms; m=1, (n+s) is greater than or equal to 2 and n and s are each greater than or equal to 0; and (OR^{I}) is at the position α or β with respect to the carbonyl group and at least two carbonyl groups are separated by 2-6 carbon atoms;
(D) an inorganic fiber.

2. A composition according to claim 1 comprising
(i) 100 parts by weight in total of components (A) and (B), said 100 parts consisting of from 30 to 60% by weight of component (A) and 70 to 40% by weight of component (B),
(ii) 0.01 to 10 parts by weight of component (C), and
(iii) 5 to 150 parts by weight of component (D).

3. A composition according to claim 1 or claim 2 wherein the polyphenylene ether (A) has an intrinsic viscosity of 0.55 dl/g or more and less than 0.62 dl/g.

4. A composition according to any one of claims 1 to 3 wherein the aliphatic polyamide (B) has a number-average molecular weight of 11,000 or more and less than 16,000.

5. A composition according to any one of claims 1 to 4 wherein the compatibilizing agent (C) is selected from maleic anhydride, maleic acid, fumaric acid, itaconic acid, glycidyl acrylate, glycidyl methacrylate and allylglycidyl ether.

6. A composition according to any one of claims 1 to 5 wherein the inorganic fiber (D) is a glass fiber.

7. A composition according to any one of claims 1 to 6 wherein (D) the inorganic fiber has an average fiber length of 150 to 400 µm.

8. A composition according to any one of claims 1 to 7 wherein the composition is obtainable by blending components (A) and (C) and then adding components (B) and (D).

9. A process for producing a composition according to any of claims 1 to 7 which process comprises blending components (A) and (C) and then adding components (B) and (D) to the blend.

10. Use of a composition according to any one of claims 1 to 8 in forming a shaped article.

## Patentansprüche

1. Thermoplastische Harz-Zusammensetzung, welche umfaßt:
(A) einen Polyphenylenether mit einer Grenzviskosität von 0,55 dl/g oder mehr und weniger als 0,65 dl/g, gemessen in Chloroform bei 30°C;
(B) ein aliphatisches Polyamid mit einem Zahlenmittel des Molekulargewichts von 10000 oder mehr und weniger als 30000, bezogen auf die Menge an Endgruppe gemessen;
(C) ein Kompatibilisierungsmittel, bei dem es sich handelt um:
(i) eine ungesättigte polare Verbindung, die in ihrem Molekül sowohl (a) eine Kohlenstoff-Kohlenstoff-Doppelbindung oder eine Kohlenstoff-Kohlenstoff-Dreifachbindung als auch (b) eine Carboxylgruppe, eine Säureanhydridgruppe, eine Aminogruppe, eine Säureamidgruppe, eine Imidogruppe, eine Epoxygruppe, eine Carboxylatgruppe, eine Isocyanatgruppe, eine Methylolgruppe oder eine Hydroxylgruppe aufweist, oder
(ii) eine Verbindung, die ausgewählt ist aus aliphatischen Polycarbonsäuren und Derivaten derselben der Formel :
(R^{I}O)^{m}R(COOR^{II})ₙ(CONR^{III}R^{IV})ₛ
worin R für eine geradkettige oder verzweigtkettige gesättigte aliphatische Kohlenwasserstoffgruppe mit 2 - 20 Kohlenstoffatomen steht und R^{I} ausgewählt ist aus Wasserstoff und Alkyl-, Aryl-, Acyl- und Carbonyldioxygruppen mit 1 - 10 Kohlenstoffatomen; jedes R^{II} unabhängig aus Wasserstoff und Alkyl- und Arylgruppen mit 1 - 20 Kohlenstoffatomen ausgewählt ist; R^{III} und R^{IV} unabhängig ausgewählt sind aus Wasserstoff und Alkyl- und Arylgruppen mit 1 - 10 Kohlenstoffatomen; m = 1, (n + s) größer als oder gleich 2 ist und n und s jeweils größer als oder gleich 0 sind; und (OR^{I}) sich bezüglich der Carbonylgruppe in der α- oder β-Stellung befindet und mindestens zwei Carbonylgruppen durch 2 - 6 Kohlenstoffatome getrennt sind;
(D) eine anorganische Faser.

2. Zusammensetzung nach Anspruch 1, umfassend
(i) insgesamt 100 Gewichtsteile Komponenten (A) und (B), wobei diese 100 Teile aus 30 bis 60 Gewichts-% Komponente (A) und 70 bis 40 Gewichts-% Komponente (B) bestehen,
(ii) 0,01 bis 10 Gewichtsteile Komponente (C) und
(iii) 5 bis 150 Gewichtsteile Komponente (D).

3. Zusammensetzung nach Anspruch 1 oder Anspruch 2, in welcher der Polyphenylenether (A) eine Grenzviskosität von 0,55 dl/g oder mehr und weniger als 0,62 dl/g aufweist.

4. Zusammensetzung nach irgendeinem der Ansprüche 1 bis 3, in welcher das aliphatische Polyamid (B) ein Zahlenmittel des Molekulargewichts von 11000 oder mehr und weniger als 16000 aufweist.

5. Zusammensetzung nach irgendeinem der Ansprüche 1 bis 4, in welcher das Kompatibilisierungsmittel (C) aus Maleinsäureanhydrid, Maleinsäure, Fumarsäure, Itaconsäure, Glycidylacrylat, Glycidylmethacrylat und Allylglycidylether ausgewählt ist.

6. Zusammensetzung nach irgendeinem der Ansprüche 1 bis 5, in welcher die anorganische Faser (D) eine Glasfaser ist.

7. Zusammensetzung nach irgendeinem der Ansprüche 1 bis 6, in welcher die anorganische Faser (D) eine durchschnittliche Faserlänge von 150 bis 400 µm aufweist.

8. Zusammensetzung nach irgendeinem der Ansprüche 1 bis 7, in welcher die Zusammensetzung durch Mischen der Komponenten (A) und (C) und anschließende Zugabe der Komponenten (B) und (D) erhältlich ist.

9. Verfahren zur Herstellung einer Zusammensetzung nach irgendeinem der Ansprüche 1 bis 7, umfassend das Mischen der Komponenten (A) und (C) und die anschließende Zugabe der Komponenten (B) und (D) zu der Mischung.

10. Verwendung einer Zusammensetzung nach irgendeinem der Ansprüche 1 bis 8 bei der Bildung eines Formkörpers.

## Revendications

1. Composition de résine thermoplastique qui comprend :
(A) un poly(oxyde de phénylène) ayant une viscosité intrinsèque de 0,55 dl/g ou supérieure à 0,55 dl/g et inférieure à 0,65 dl/g mesurée dans le chloroforme à 30°C ;
(B) un polyamide aliphatique ayant une masse moléculaire moyenne en nombre de 10 000 ou supérieure à 10 000 et inférieure à 30 000 mesurée en termes de la quantité de groupes d'extrémité ;
(C) un agent de compatibilité qui est :
(i) un composé insaturé polaire ayant dans sa molécule à la fois (a) une double liaison carbone-carbone ou une triple liaison carbone-carbone et (b) un groupe carboxyle, un groupe anhydride d'acide, un groupe amino, un groupe amide acide, un groupe imido, un groupe époxy, un groupe carboxylate, un groupe isocyanate, un groupe méthylol ou un groupe hydroxyle, ou
(ii) un composé choisi parmi les acides aliphatiques polycarboxyliques et leurs dérivés de formule :
(R^{I}O)^{m}R(COOR^{II})ₙ(CONR^{III}R^{IV})ₛ
dans laquelle R représente un groupe hydrocarboné aliphatique saturé en chaîne linéaire ou en chaîne ramifiée de 2 à 20 atomes de carbone et R¹ est choisi parmi l'hydrogène et les groupes alcoyle, aryle, acyle, et carbonyldioxy ayant de 1 à 10 atomes de carbone ;
chacun de R^{II} étant indépendamment choisi parmi l'hydrogène et les groupes alcoyle et aryle de 1 à 20 atomes de carbone ; R^{III} et R^{IV} sont choisis indépendamment parmi l'hydrogène et les groupes alcoyle et aryle de 1 à 10 atomes de carbone ; m=1, (n+s) est supérieur ou égal à 2 et n et s sont chacun supérieur ou égal à 0 ; et OR¹ est dans la position α ou β par rapport au groupe carbonyle et au moins deux groupes carbonyle sont séparés par 2 à 6 atomes de carbone ;
(D) une fibre minérale.

2. Composition suivant la revendication 1, comprenant
(i) 100 parties en poids au total des constituants (A) et (B), ces 100 parties consistant en 30 à 60 % en poids du constituant (A) et en 70 à 40 % en poids du constituant (B)
(ii) de 0,01 à 10 parties en poids du constituant (C), et
(iii) de 5 à 150 parties en poids du constituant (D)

3. Composition suivant la revendication 1 ou 2, dans laquelle le poly(oxyde de phénylène) (A) a une viscosité intrinsèque de 0,55 dl/g ou supérieure à 0,55 dl/g et inférieure à 0,62 dl/g.

4. Composition suivant l'une quelconque des revendications 1 à 3, dans laquelle le polyamide (B) aliphatique a une masse moléculaire moyenne en nombre de 11 000 ou supérieure à 11 000 et inférieure à 16 000.

5. Composition suivant l'une quelconque des revendications 1 à 4, dans laquelle l'agent (C) de compatibilité est choisi parmi l'anhydride maléique, l'acide maléique, l'acide fumarique, l'acide itaconique, l'acrylate de glycidyle, le méthacrylate de glycidyle et l'oxyde allylglycidylique.

6. Composition suivant l'une quelconque des revendications 1 à 5, dans laquelle la fibre (D) minérale est de la fibre de verre.

7. Composition suivant l'une quelconque des revendications 1 à 6, dans laquelle la fibre (D) minérale a une longueur moyenne de fibre de 150 à 400 µm.

8. Composition suivant l'une quelconque des revendications 1 à 7, dans laquelle la composition peut être obtenue en mélangeant des constituants (A) et (C) puis en ajoutant des constituants (B) et (D).

9. Procédé de préparation de composition suivant l'une quelconque des revendications 1 à 7, qui consiste à mélanger des constituants (A) et (C) puis à ajouter des constituants (B) et (D) au mélange.

10. Utilisation des compositions suivant l'une des quelconques revendications 1 à 8 pour former un objet conformé.
